# EUROPEAN PATENT SPECIFICATION

(11) **EP 4 124 516 B1**
(45) Date of publication and mention of the grant of the patent: **20.11.2024**
(21) Application number: 21188857.3
(22) Date of filing: 30.07.2021
(51) Int. Cl.: B60S 1/34, B60S 1/52

(54) **VEHICLE WINDSHIELD WIPER ASSEMBLY WITH AN IMPROVED HOSE CONNECTOR FOR THE ASSEMBLY S WASHER FLUID SPRAYING WINDSHIELD WIPER**
FAHRZEUGSCHEIBENWISCHERANLAGE MIT EINEM VERBESSERTEN SCHLAUCHANSCHLUSS ZUR MONTAGE EINES SCHEIBENWISCHFLÜSSIGKEITSSPRÜHENDEN SCHEIBENWISCHERS
ENSEMBLE ESSUIE-GLACE DE PARE-BRISE DE VÉHICULE AVEC UN CONNECTEUR DE TUYAU AMÉLIORÉ POUR L'ASSEMBLAGE D'ESSUIE-GLACE DE PARE-BRISE DE PULVÉRISATION DE LIQUIDE DE LAVAGE

(43) Date of publication of application: 01.02.2023
(73) Proprietor: Valeo Autosystemy SP. Z.O.O., 32-050 Skawina (PL)
(72) Inventor: Antoni, SPIECHA, 78320 LE MESNIL SAINT DENIS (FR); Daniel, TOPOLSKI, 78320 LE MESNIL SAINT DENIS (FR)
(74) Representative: Valeo Visibility

(56) References cited:
- DE-A1- 102007 062 613
- DE-A1- 4 216 705
- FR-A1- 2 735 735
- FR-A1- 3 035 631
- US-A- 3 234 579

## Description

### Technical Field

This disclosure pertains to a vehicle windshield wiper assembly comprising a windshield wiper having a wiper arm and a wiper blade attached to an outer end of the wiper arm, a pivot shaft for pivoting the windshield wiper, which is attached to a base end of the wiper arm, and a washer fluid spraying device including a spray nozzle device for the spraying of washer fluid, which is located in the windshield wiper, a nozzle hose, which is fluidly connected to the spray nozzle device and is configured for the delivery of washer fluid to the spray nozzle device, a fluid supply hose, which is fluidly connected to the nozzle hose and is configured for the supply of washer fluid to the nozzle hose, and a hose connector, which fluidly interconnects the fluid supply hose and the nozzle hose, and which is fitted onto the pivot shaft, the hose connector having a fluid inlet portion with a fluid inlet connected to the fluid supply hose and a fluid outlet portion with a fluid outlet connected to the nozzle hose.

### Background Art

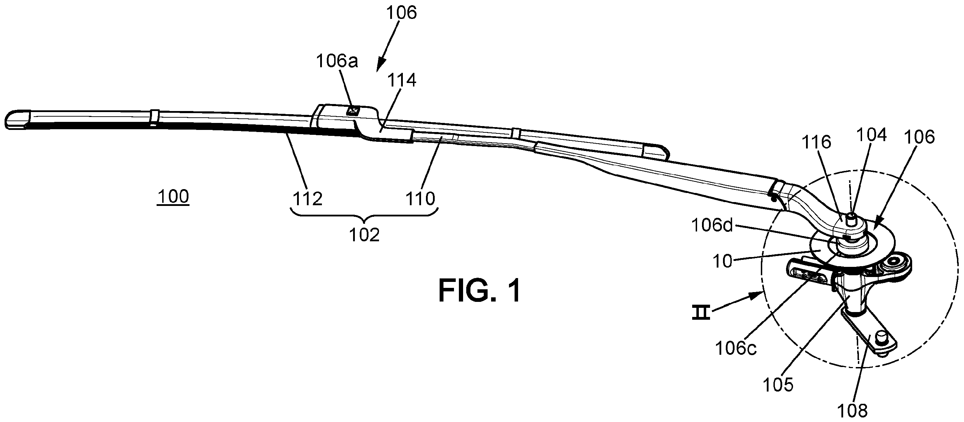

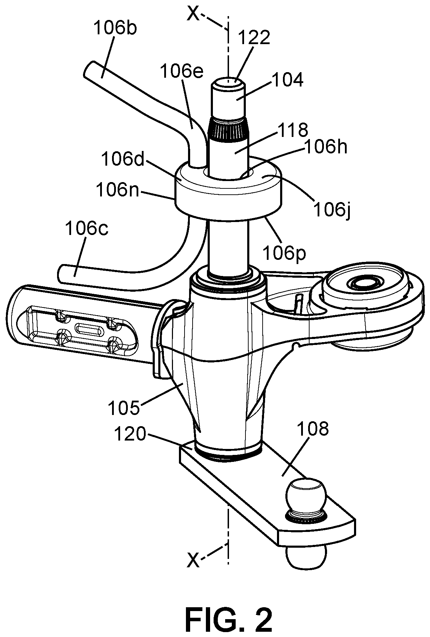

Such a vehicle windshield wiper assembly is known from document JP 2010-012815 A, cf. its Figs. 1 and 2. In the usual manner, in this assembly 10, the base end 31 of a windshield wiper 30 is attached to a pivot shaft 24. An oval rubber grommet 40 is set into a through-hole 16a of an inner vehicle panel 16 and provides a watertight seal, which prevents water from entering the car body. The grommet 40 has an inlet port 45a on one side and an outlet port 44a on the opposite side. The inlet port 45a is connected to an upper end 37 of a tank hose 38, and the outlet port 44a is connected to a lower end 36 of a nozzle hose 35. Thus, the grommet 40 also acts as a hose connector.

This known assembly 10 has the drawback that, when the windshield wiper 30 is rotated, the lower end 36 of the nozzle hose 35 is subjected to stress. Indeed, since the lower end 36 of the nozzle hose 35 is fixed to the grommet 40, and the rest of the nozzle hose 35 is threaded through the windshield wiper 30, the nozzle hose must constantly adapt to the reciprocating motion of the windshield wiper 30. The nozzle hose 35 might have some slack, which allows it to adapt more easily, but this additional hose length must then be accommodated into an already crowded space.

In its Figs. 2 to 4, document JP 2014-227078 A discloses another known vehicle windshield wiper assembly 10. The hose connector 26 of this assembly is integrally formed on a plate 24. Hence, this solution has the same drawbacks as the solution of JP 2010-012815 A.

The document US 3,234,579 A discloses a further vehicle windshield wiper assembly known in the art.

### Summary

It is thus an object of the present disclosure to provide a vehicle windshield wiper assembly with an improved fluid hose connection design. One aim in particular is to optimize the hose connections such that the length of the nozzle hose can be reduced and/or stress on the nozzle hose can be avoided.

According to the present disclosure, this object is achieved with a vehicle windshield wiper assembly as defined in claim 1.

By having a hose connector whose fluid outlet portion follows the pivot shaft's reciprocating swivel motion, the lower end of the nozzle hose, by virtue of it being connected to the fluid outlet portion, can move together with the rest of the hose. Accordingly, the entire nozzle hose can follow the rotation of the windshield wiper.

In other words, thanks to the present disclosure, there is no longer any relative motion between parts of the nozzle hose and the windshield wiper. The lack of relative motion avoids stress on the nozzle hose. Also, there can be no friction between the nozzle hose and the windshield wiper. On top of that, the length of the nozzle hose can be reduced since the hose does not need to adapt to the wiper's movements.

The following features can be optionally implemented, separately or in combination:
- the hose connector is formed in a circular ring shape;
- the hose connector has a central through-hole, and the pivot shaft penetrates the central through-hole;
- the whole hose connector is fixed to the pivot shaft for rotation therewith;
- the hose connector has an annular skirt, which surrounds the pivot shaft, and the free end of the annular skirt faces away from the windshield wiper;
- the hose connector has a central fastening collar, through which the hose connector is fastened to the pivot shaft;
- the fastening collar is snap-fitted on the pivot shaft, the snap-fit preferably allowing an adjustment of the hose connector's position along the pivot shaft;
- the fastening collar is formed as a separate individual part, which includes the fluid inlet;
- the hose connector has a preferably frustoconically-shaped fastening member, through which the hose connector is fastened to the wiper arm, wherein, preferably, the fastening member is formed as a separate individual part;
- the fastening member is snap-fitted on the wiper arm;
- the fastening member includes a support ring and at least one fastening tongue supported by the support ring;
- the fastening member has a plurality of fastening tongues, which are distributed along the circumference of the support ring;
- the fluid outlet portion is rotatably mounted on the fluid inlet portion such that the fluid outlet portion can rotate with respect to the fluid inlet portion;
- the hose connector contains a preferably toroidal-shaped fluid chamber, which is located at the interface between the fluid inlet portion and the fluid outlet portion.

The present disclosure also relates to a motor vehicle comprising a vehicle windshield wiper assembly as defined above.

### Brief Description of Drawings

Exemplary embodiments of the present disclosure will now be described in detail with reference to the accompanying drawings, in which:
**Fig. 1**
   [Fig. 1 is an overall perspective view of a first non-claimed embodiment of a vehicle windshield wiper assembly of the present disclosure.
**Fig. 2**
   [Fig. 2] shows the detail II of Fig. 1, which is delimited by a dotted circle.
**Fig. 3**

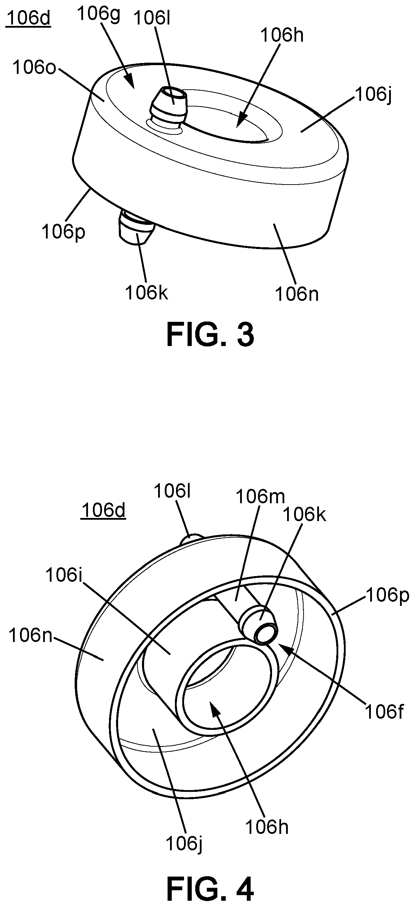

   [Fig. 3] is a first perspective view of the hose connector of the vehicle windshield wiper assembly of Fig. 1.
**Fig. 4**
   [Fig. 4] is a second perspective view of the hose connector of the vehicle windshield wiper assembly of Fig. 1.
**Fig. 5**

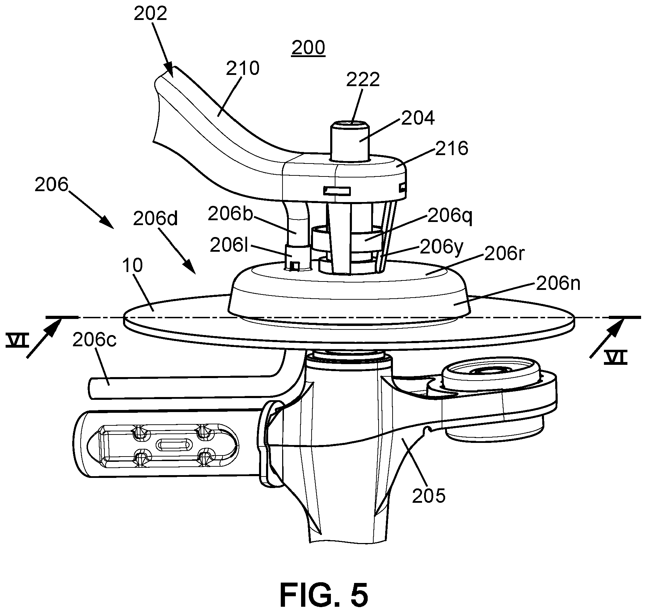

   [Fig. 5] is a partial perspective view of a second embodiment of a vehicle windshield wiper assembly of the present disclosure.
**Fig. 6**

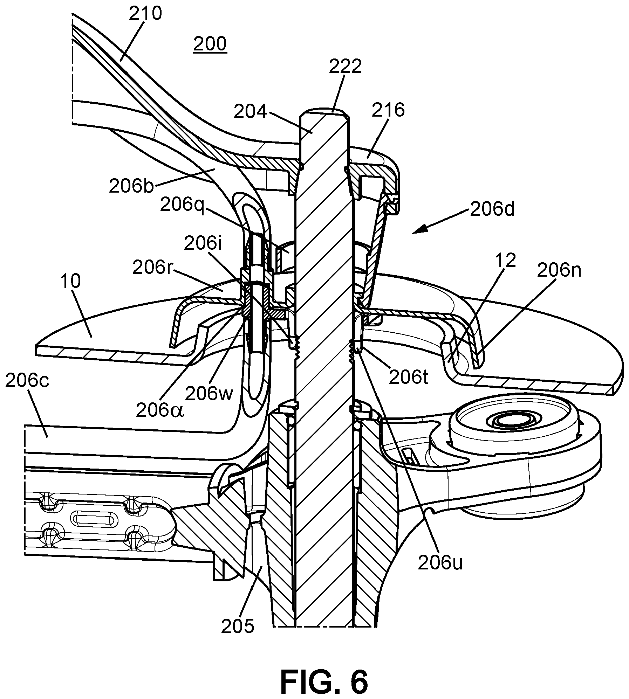

   [Fig. 6] is a view of a cross-section of the second embodiment, taken along line VI-VI in Fig. 5.
**Fig. 7**

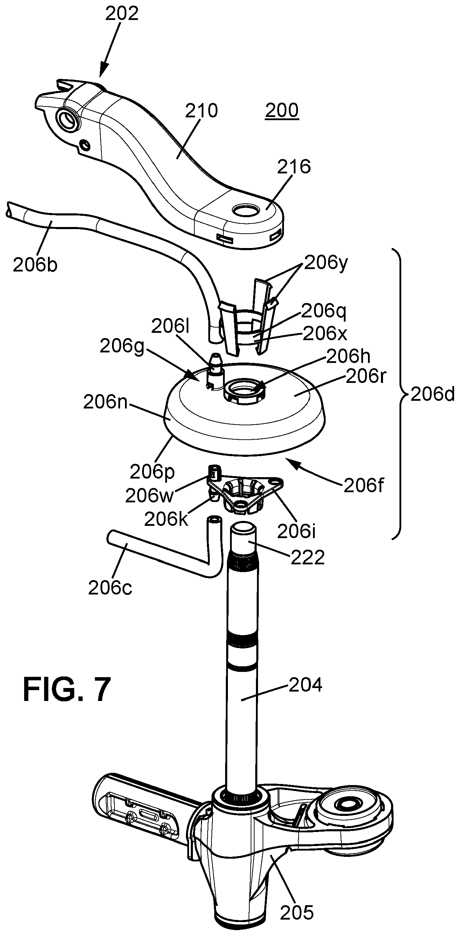

   [Fig. 7] is an exploded perspective view of the second embodiment.
**Fig. 8**

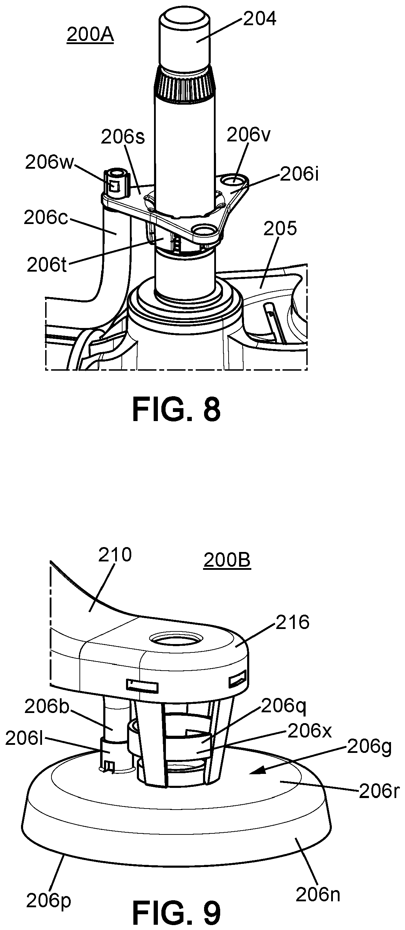

   [Fig. 8] is a perspective view of the lower subassembly of the second embodiment.
**Fig. 9**
   [Fig. 9] is a perspective view of the upper subassembly of the second embodiment.
**Fig. 10**

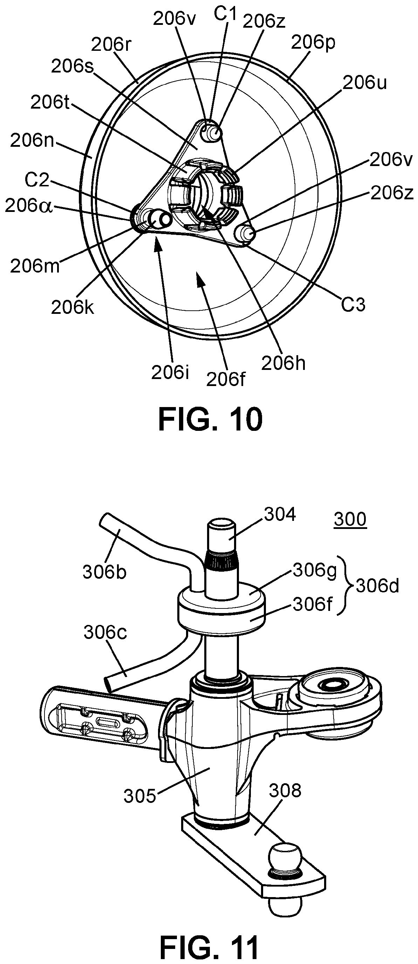

   [Fig. 10] is a perspective view from below of the hose connector of the second embodiment.
**Fig. 11**
   [Fig. 11] is a partial perspective view of a third non-claimed embodiment of a vehicle windshield wiper assembly of the present disclosure.
**Fig. 12**

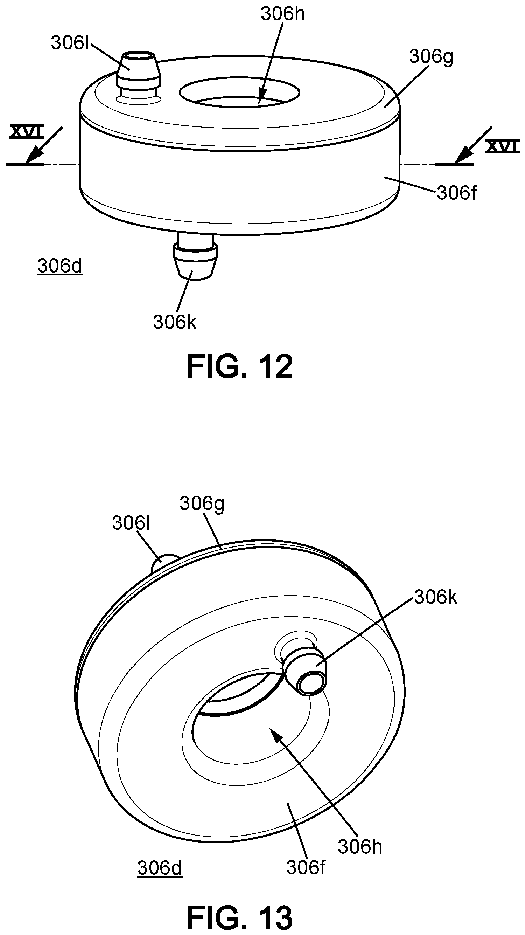

   [Fig. 12] is a first perspective view of the hose connector of the vehicle windshield wiper assembly of Fig. 11.
**Fig. 13**
   [Fig. 13] is a second perspective view of the hose connector of the vehicle windshield wiper assembly of Fig. 11.
**Fig. 14**

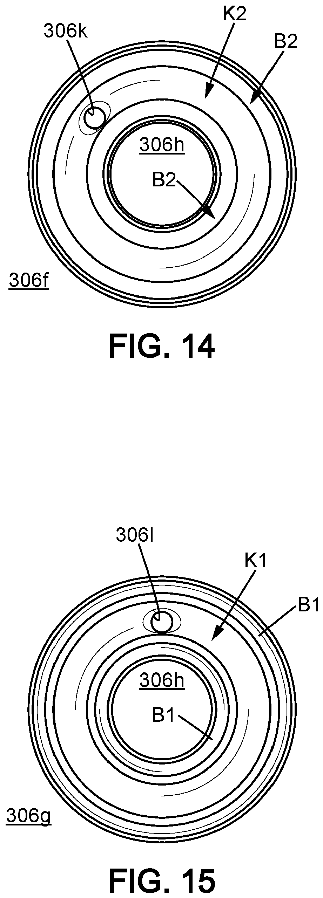

   [Fig. 14] is a top plan view of the fluid inlet portion of the hose connector of Fig. 12.
**Fig. 15**
   [Fig. 15] is a bottom plan view of the fluid outlet portion of the hose connector of Fig. 12.
**Fig. 16**

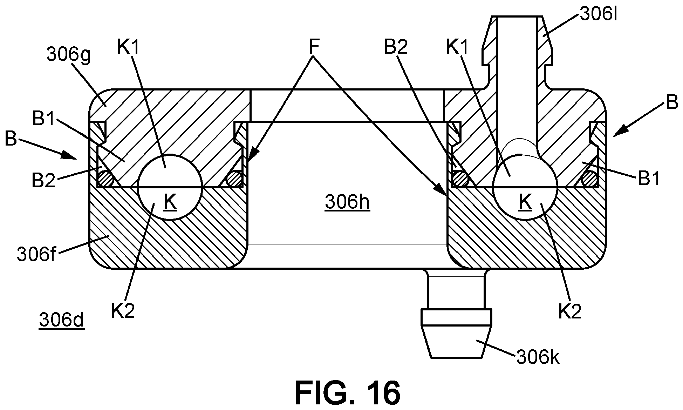

   [Fig. 16] is a cross-sectional view of the hose connector of Fig. 12, taken along line XVI-XVI.
**Fig. 17**

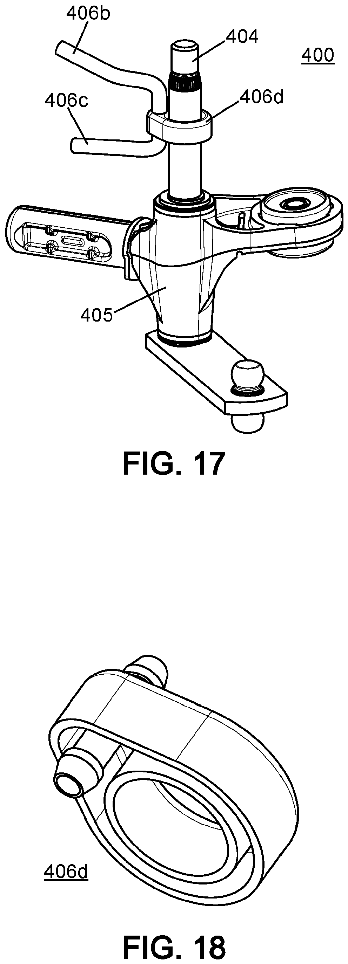

   [Fig. 17] is a partial perspective view of a vehicle windshield wiper assembly according to a comparative example.
**Fig. 18**
   [Fig. 18] is a perspective view of the hose connector of the vehicle windshield wiper assembly of Fig. 17.

### Description of Embodiments

The present disclosure relates to vehicle windshield wiper systems. These systems are typically mounted at the back and/or the front of a vehicle, and are used to remove rain, dirt or the like from the vehicle's windows.

More particularly, the present disclosure is concerned with windshield wiper systems, which include a specific type of windshield washer system where the spray nozzle device for the spraying of washer fluid is located in the windshield wiper. In the following, this type of washer system will be referred to as "moving nozzle washer system".

In one implementation of a moving nozzle washer system, the one or more spray nozzles are arranged in the outer free end of the wiper arm. This configuration is commonly referred to as "wet arm". In another implementation, sold by the applicant under the tradename "AquaBlade^{®}", the spray nozzles are formed in the wiper blade.

In moving nozzle washer systems, the washer fluid must be transported through the windshield wiper in order to reach the spray nozzles. The three embodiments described below illustrate how this washer fluid transport is implemented according to the present disclosure.

### First embodiment

Figs. 1 to 4 show a first non-claimed embodiment 100 of a vehicle windshield wiper assembly according to the present disclosure.

The vehicle windshield wiper assembly 100 is a subunit of a complete windshield wiper system. The assembly 100 is adapted to be mounted through a vehicle cowl, a portion 10 of which is shown in Fig. 1.

The assembly 100 comprises a windshield wiper 102, a pivot shaft 104, a shaft holder 105, a washer fluid spraying device 106 and a drive linkage 108.

The windshield wiper 102 has a wiper arm 110 and a wiper blade 112. The wiper arm 110 has an outer end 114 and a base end 116. The wiper blade 112 is attached to the outer end 114, and the pivot shaft 104 is attached to the base end 116.

With reference to Fig. 2, the pivot shaft 104 extends along a longitudinal axis X-X. A lower part of the pivot shaft 104 is rotatably mounted in the shaft holder 105. An upper part 118 of the pivot shaft protrudes upwards from the shaft holder 105. The drive linkage 108 has a fastening end 120 and is fastened to the upper part 118 of the pivot shaft 104 via the fastening end 120. The top 122 of the pivot shaft 104 supports the base end 116 of the wiper arm 110.

To move the wiper 102 back and forth, the drive linkage 108 is operated by a drive motor (not shown), which results in a reciprocating pivoting motion of the pivot shaft 104 around its longitudinal axis X-X. The wiper 102 then pivots in unison with the pivot shaft 104 since it is fastened to the pivot shaft `s top 122.

The washer fluid spraying device 106 is made of a plurality of components and extends from the outer end 114 of the wiper arm 110, through the wiper arm 110, to the base end 116 of the wiper arm 110, and therefrom past the pivot shaft 104.

The washer fluid spraying device 106 includes a spray nozzle device 106a, a nozzle hose 106b, a fluid supply hose 106c, and a hose connector 106d.

Here, the spray nozzle device is implemented as a single spray nozzle 106a, which is located in the outer end 114 of the wiper arm 110. Accordingly, the vehicle windshield wiper assembly 100 of Figs. 1 to 4 is of the "wet arm" type.

The nozzle hose 106b runs through the wiper arm 110. It is configured to deliver washer fluid from the hose connector 106d to the spray nozzle 106a. An outer end of the nozzle hose 106b is fluidly connected to the spray nozzle 106a. An opposite inner end 106e of the nozzle hose 106b is fluidly connected to the hose connector 106d.

The fluid supply hose 106c runs from the hose connector 106d below the cowl 10 and towards a washer fluid tank (not shown) inside the car body. The fluid supply hose 106c is fluidly connected, via the hose connector 106d, to the nozzle hose 106b and is configured to supply washer fluid to the nozzle hose 106b.

The hose connector 106d fluidly interconnects the two hoses 106b and 106c. In the present embodiment, it is made of a single piece.

The hose connector 106d may have a built-in fluid valve, such as a check valve. Such a valve may be used to keep the washer fluid inside the nozzle hose 106b. This is to reduce leakage after spraying, and to avoid leakage during servicing (e.g. when replacing the windshield wiper).

As apparent from Fig. 2, the hose connector 106d is fitted onto the pivot shaft 104. More precisely, the hose connector 106d has a central through-hole 106h, and the pivot shaft 104 penetrates the central through-hole 106h. In the present embodiment, the whole hose connector 106d is fixed to the pivot shaft 104 for rotation therewith. To that end, the hose connector 106d has a central fastening collar 106i (cf. Fig. 4), through which the hose connector 106d is fastened to the pivot shaft 104.

The hose connector 106d is shown on its own in Figs. 3 and 4. As apparent therefrom, in the present embodiment, the hose connector has a circular ring shape. An annular ledge 106j surrounds the through-hole 106h. The ledge 106j defines a plane, which is substantially perpendicular to the longitudinal axis X-X of the pivot shaft 104.

The hose connector 106d has a fluid inlet portion 106f and a fluid outlet portion 106g. The fluid inlet portion 106f is annular and corresponds to the inner side of the ledge 106j. The fluid outlet portion 106g is also annular and corresponds to the outer side of the ledge 106j.

The fluid inlet portion 106f has a fluid inlet 106k, which is connected to the fluid supply hose 106c. The fluid outlet portion 106g has a fluid outlet 106l, which is connected to the nozzle hose 106b. Here, the fluid inlet 106k and the fluid outlet 106l are implemented as a single tube 106m, which traverses the ledge 106j. The ends of the tube 106m, which then correspond, respectively, to the fluid inlet 106k and to the fluid outlet 106l, may be plug-shaped to facilitate the attachment of the hoses 106b, 106c.

The hose connector 106d also has an annular skirt 106n, which extends downwards from the ledge 106j, substantially at right angles thereto. The annular skirt 106n has an upper attachment end 106o, where it merges into the ledge 106j. The annular skirt 106n extends from its upper end 106o down to a lower free end 106p.

As can be seen in Fig. 2, the annular skirt 106n surrounds the pivot shaft 104. The free end 106p of the annular skirt 106n faces away from the windshield wiper 102.

The annular skirt 106n may act as a barrier to the ingress of water into the car body.

### Second embodiment

A second embodiment 200 of a vehicle windshield wiper assembly according to the present disclosure will now be described with reference to Figs. 5 to 10.

As in the first embodiment 100, the second embodiment 200 comprises a windshield wiper 202 with a wiper arm 210 and a wiper blade (not shown), a pivot shaft 204, a shaft holder 205, and a washer fluid spraying device 206 with a spray nozzle device (not shown), a nozzle hose 206b, a fluid supply hose 206c and a hose connector 206d.

The second embodiment 200 has a hose connector 206d, which is different from the first embodiment's hose connector 106d. Otherwise, the second embodiment 200 is comparable to the first embodiment 100. For similar features, reference is made to the corresponding description above. The following description will focus on the differing hose connector 206d.

As best apparent from Fig. 7, the hose connector 206d is made of three separate parts, namely a lower fastening collar 206i, an upper fastening member 206q and a middle shielding cap 206r.

The lower fastening collar 206i has a triangular base 206s with a central through-hole 206h, and a fastening sleeve 206t protruding downwards from the base 206s (cf. Fig. 10). The fastening sleeve 206t comprises a set of fastening legs 206u, which are distributed around the circumference of the through-hole 206h.

The triangular base 206s has three corners C1, C2 and C3, cf. Fig. 10. Two of the three corners, namely C1 and C3, are pierced by a securing aperture 206v. The remaining corner C2 supports a fluid tube 206m, which traverses the base 206s. The lower end of the tube 206m is plug-shaped and forms a fluid inlet 206k. An upper end of the fluid tube 206m is formed as an insert 206w, cf. Fig. 8.

In the illustrated embodiment, the fastening member 206q has a frustoconical shape, cf. Fig. 7. It includes a support ring 206x and three fastening tongues 206y, which are supported by the support ring 206x and distributed along its circumference. Preferably, about half of the support ring's circumference is free of any fastening tongues. This is to provide mounting space for the nozzle hose 206b.

The intermediate shielding cap 206r has the general shape of a dome. It includes an annular skirt 206n with a lower free end 206p. It also has a central through-hole 206h, which accommodates the pivot shaft 204. On the outer side of the shielding cap 206r, next to the through-hole 206h, there is a fluid outlet 206l. This fluid outlet is plug-shaped and receives the nozzle hose 206b. On the inner side of the shielding cap 206r, cf. Fig. 10, there are two positioning studs 206z and a receiving hole 206α. The two positioning studs 206z and the receiving hole 206α together form the three corners of a triangle. The through-hole 206h is at the centre of this triangle. The two positioning studs 206z are inserted into the securing apertures 206v of the fastening collar 206i. The receiving hole 206α receives the tubular insert 206w of the fastening collar 206i.

As shown in Fig. 6, the hose connector 206d is secured, on the one hand, to the pivot shaft 204 via the fastening collar 206i, and on the other hand, to the wiper arm 210 via the fastening member 206q.

More precisely, via the fastening legs 206u of its fastening sleeve 206t, the fastening collar 206i is snap-fitted on the pivot shaft 204. The snap-fit preferably allows for an adjustment of the hose connector's position along the pivot shaft 204.

The fastening member 206q is snap-fitted on the wiper arm 210 and on the shielding cap 206r via its fastening tongues 206y.

As in the first embodiment, in this second embodiment, the whole hose connector 206d is fixed to the pivot shaft 204 for rotation therewith. In other words, when the pivot shaft 204 pivots, all three parts 206i, 206r and 206q of the hose connector 206d move in unison with the pivot shaft 204.

In order to simplify the mounting of the vehicle windshield wiper assembly 200 onto a motor vehicle, the assembly 200 may be provided as two individual combinable subassemblies 200A and 200B, which are shown in Figs. 8 and 9, respectively. The lower subassembly 200A is mounted by positioning it below the motor vehicle's cowl 10 and then raising it until the pivot shaft 204 is in its final position where it protrudes above the cowl 10. Once the lower subassembly 200A is in place, the upper subassembly 200B is then mounted by positioning it above the cowl 10 and lowering it onto the pivot shaft 204. The lowering step is completed when the tubular insert 206w is securely fixed in the corresponding receiving hole 206α, the two positioning studs 206z are inserted in the corresponding securing apertures 206v, and the base end 216 of the wiper arm 210 sits on the top 222 of the pivot shaft 204.

With this process, it is very easy to connect the nozzle hose 206b to the fluid supply hose 206c, and the wiper arm 210 to the pivot shaft 204. Indeed, both connections are made simultaneously with a single movement.

Furthermore, the fastening member 206q acts as a spacer, which ensures that, after the mounting of the assembly 200, the shielding cap 206r is at a well-defined longitudinal distance from the base end 216 and at the right longitudinal position above the cowl 10, cf. Fig. 5.

Fig. 6 illustrates that the cowl 10 may have a protruding annular flange 12. In this case, the cap's annular skirt 206n surrounds the flange 12. This configuration acts as a seal or barrier that prevents water from entering the car body.

### Third embodiment

A third non-claimed embodiment 300 of a vehicle windshield wiper assembly according to the present disclosure will now be described with reference to Figs. 11 to 16.

Fig. 11 is a partial view of the assembly 300, wherein the windshield wiper is omitted. The main difference of this third assembly 300 compared to the first and second assemblies 100 and 200 lies in the setup of the hose connector. The following description will thus focus on this aspect. For similar features, reference is made to the previous explanations above.

Different views of the hose connector 306d of the third embodiment 300 are provided in Figs. 12 to 16. The hose connector 306d is made of two individual parts 306f and 306g, which correspond to the fluid inlet portion and to the fluid outlet portion, respectively.

The fluid inlet portion 306f is configured to be fixed e.g. to the shaft holder 305, the cowl 10 or the car body such that it remains stationary when the windshield wiper is operated. In contrast thereto, the fluid outlet portion 306g is fixed to the pivot shaft 304 for rotation therewith. To allow for the ensuing relative movement between the two portions, the fluid outlet portion 306g is rotatably mounted on the fluid inlet portion 306f such that the fluid outlet portion 306g can rotate with respect to the fluid inlet portion 306f.

As apparent from Fig. 16, the interface F between the two annular portions 306f and 306g comprises a sliding contact bearing B. The contact bearing B comprises a guide groove B2 and a corresponding slide ring B1, which is slidingly received in the guide groove B2. In the shown embodiment, the slide ring B1 is part of the fluid outlet portion 306g, and the guide groove B2 is part of the fluid inlet portion 306f, but this could of course be interchanged.

The hose connector 306d contains a fluid chamber K, which is located at the interface F between the fluid inlet portion 306f and the fluid outlet portion 306g. In the present example, the fluid chamber K is toroidal-shaped. An upper part K1 of the fluid chamber K is formed in the fluid outlet portion 306g. A lower part K2 of the fluid chamber K is formed in the fluid inlet portion 306f.

Washer fluid transiting through the hose connecter 306d enters via the inlet 306k, travels through the fluid chamber K and leaves via the outlet 306l.

Thanks to the presence of the fluid chamber K, during operation, the washer fluid can flow from the inlet 306k to the outlet 306l even though the outlet 306l pivots back and forth relative to the inlet 306k.

### Advantages and technical effects

In all three embodiments 100, 200 and 300, the hose connector 106d, 206d, 306d is designed such that its fluid outlet 106l, 206l, 306l moves in unison with the pivot shaft 104, 204, 304 when the latter is rotated. Accordingly, the inner end of the nozzle hose 106b, 206b, 306b, which is attached to the fluid outlet, pivots in the same way as the rest of the nozzle hose. This means that there is no relative movement between different sections of the nozzle hose when the windshield wiper is operated. Thus, during operation, there is no stress on the nozzle hose. Furthermore, the nozzle hose can closely follow the outline of the wiper arm since it does not need any extra length to compensate for the pivoting action.

In the third embodiment, the fluid inlet 306k remains stationary during operation of the windshield wiper. Hence, there is no relative movement between different sections of the fluid supply hose 306c. This avoids stress on the fluid supply hose 306c. Furthermore, the fluid supply hose 306c can remain short since it does not need any extra length to compensate for the pivoting action.

### Comparative Example

Figs. 17 and 18 illustrate a further vehicle windshield wiper assembly 400. In this comparative example, the hose connector 406d is drop-shaped. The whole hose connector 406d is configured to be fixed to the shaft holder 405, to the cowl or to the car body. Accordingly, the hose connector 406d remains stationary, i.e. it does not rotate with the pivot shaft 404. Rather, the pivot shaft 404 is mounted through the hose connector 406d so that it can rotate therein.

## Claims

1. A vehicle windshield wiper assembly (200) comprising:
a. a windshield wiper (2 02) having a wiper arm (110) and a wiper blade (112) attached to an outer end (114) of the wiper arm;
b. a pivot shaft (204) for pivoting the windshield wiper (2 02), which is attached to a base end (116) of the wiper arm; and
c. a washer fluid spraying device (106) including:
i. a spray nozzle device (106a) for the spraying of washer fluid, which is located in the windshield wiper (102);
ii. a nozzle hose (106b), which is fluidly connected to the spray nozzle device (106a) and is configured for the delivery of washer fluid to the spray nozzle device (106a);
iii. a fluid supply hose (106c), which is fluidly connected to the nozzle hose (106b) and is configured for the supply of washer fluid to the nozzle hose (106b); and
iv. a hose connector (2 06d), which fluidly interconnects the fluid supply hose (106c) and the nozzle hose (106b), and which is fitted onto the pivot shaft (104), the hose connector (206d) having:
- a central fastening collar (2 06i) through which the hose connector is fastened to the pivot shaft (104)
- a fluid inlet portion (206f) with a fluid inlet (2 06k) connected to the fluid supply hose (106c); and
- a fluid outlet portion (206g) with a fluid outlet (2 06l) connected to the nozzle hose (106b),
wherein at least the hose connector's fluid outlet portion (206g) is fixed to the pivot shaft (204) for rotation therewith, **characterized in that** the fastening collar (206i) is snap-fitted on the pivot shaft, the snap-fit preferably allowing an adjustment of the hose connector's position along the pivot shaft.

2. The vehicle windshield wiper assembly (200) of claim 1, wherein the hose connector (206d) is formed in a circular ring shape.

3. The vehicle windshield wiper assembly (200) of claim 1 or 2, wherein the hose connector (206d) has a central through-hole (2 06h), and the pivot shaft (204) penetrates the central through-hole.

4. The vehicle windshield wiper assembly (200) of any one of the previous claims, wherein the whole hose connector (206d) is fixed to the pivot shaft (204) for rotation therewith.

5. The vehicle windshield wiper assembly (200) of any one of the previous claims, wherein the hose connector has an annular skirt (2 06n), which surrounds the pivot shaft (204), and wherein the free end (2 06p) of the annular skirt faces away from the windshield wiper (202).

6. The vehicle windshield wiper assembly (200) of any one of the previous claims, wherein the fastening collar (206i) is formed as a separate individual part, which includes the fluid inlet (206k).

7. The vehicle windshield wiper assembly (200) of any one of the previous claims, wherein the hose connector (206d) has a preferably frustoconically-shaped fastening member (206q), through which the hose connector is fastened to the wiper arm (210), wherein, preferably, the fastening member (206q) is formed as a separate individual part.

8. The vehicle windshield wiper assembly (200) of claim 7, wherein the fastening member (206q) is snap-fitted on the wiper arm (210).

9. The vehicle windshield wiper assembly (200) of claim 7 or 8, wherein the fastening member (206q) includes a support ring (206x) and at least one fastening tongue (206y) supported by the support ring.

10. The vehicle windshield wiper assembly (200) of claim 9, wherein the fastening member (206q) has a plurality of fastening tongues (206y), which are distributed along the circumference of the support ring (206x).

11. A motor vehicle comprising the vehicle windshield wiper assembly (200) of any one of the previous claims.

## Patentansprüche

1. Fahrzeugwindschutzscheibenwischeranordnung (200), die Folgendes umfasst:
a. einen Windschutzscheibenwischer (202) mit einem Wischerarm (110) und einem Wischerblatt (112), das an einem äußeren Ende (114) des Wischerarms befestigt ist;
b. eine Schwenkachse (204) zum Schwenken des Windschutzscheibenwischers (202), die an einem Basisende (116) des Wischerarms befestigt ist; und
c. eine Scheibenwaschflüssigkeitssprühvorrichtung (106), die Folgendes umfasst:
i. eine Sprühdüsenvorrichtung (106a) zum Sprühen von Scheibenwaschflüssigkeit, die sich im Windschutzscheibenwischer (102) befindet;
ii. einen Düsenschlauch (106b), der fluidisch mit der Sprühdüsenvorrichtung (106a) verbunden ist und für die Abgabe von Scheibenwaschflüssigkeit an die Sprühdüsenvorrichtung (106a) ausgelegt ist;
iii. einen Flüssigkeitszufuhrschlauch (106c), der fluidisch mit dem Düsenschlauch (106b) verbunden ist und für die Zufuhr von Scheibenwaschflüssigkeit zum Düsenschlauch (106b) ausgelegt ist; und
iv. einen Schlauchanschluss (206d), der den Flüssigkeitszufuhrschlauch (106c) und den Düsenschlauch (106b) fluidisch verbindet und der an der Schwenkachse (104) montiert ist, wobei der Schlauchanschluss (206d) Folgendes aufweist:
- eine mittlere Befestigungsmanschette (206i), über die der Schlauchanschluss an der Schwenkachse (104) befestigt ist
- einen Flüssigkeitseinlassteil (206f) mit einem Flüssigkeitseinlass (206k), der mit dem Flüssigkeitszufuhrschlauch (106c) verbunden ist; und
- einen Flüssigkeitsauslassteil (206g) mit einem Flüssigkeitsauslass (2061), der mit dem Düsenschlauch (106b) verbunden ist,
wobei zumindest der Flüssigkeitsauslassteil (206g) des Schlauchanschlusses fest an der Schwenkachse (204) befestigt ist, um sich mit dieser zu drehen, **dadurch gekennzeichnet, dass** die Befestigungsmanschette (206i) an der Schwenkachse einrastet, wobei der Rastverschluss vorzugsweise eine Einstellung der Position des Schlauchanschlusses entlang der Schwenkachse ermöglicht.

2. Fahrzeugwindschutzscheibenwischeranordnung (200) nach Anspruch 1, wobei der Schlauchanschluss (206d) kreisringförmig ausgebildet ist.

3. Fahrzeugwindschutzscheibenwischeranordnung (200) nach Anspruch 1 oder 2, wobei der Schlauchanschluss (206d) ein mittleres Durchgangsloch (206h) aufweist und die Schwenkachse (204) das mittlere Durchgangsloch durchdringt.

4. Fahrzeugwindschutzscheibenwischeranordnung (200) nach einem der vorhergehenden Ansprüche, wobei der gesamte Schlauchanschluss (206d) an der Schwenkachse (204) befestigt ist, um sich mit dieser zu drehen.

5. Fahrzeugwindschutzscheibenwischeranordnung (200) nach einem der vorhergehenden Ansprüche, wobei der Schlauchanschluss eine ringförmige Schürze (206n) aufweist, die die Schwenkachse (204) umgibt, und wobei das freie Ende (206p) der ringförmigen Schürze vom Windschutzscheibenwischer (202) weg weist.

6. Fahrzeugwindschutzscheibenwischeranordnung (200) nach einem der vorhergehenden Ansprüche, wobei die Befestigungsmanschette (206i) als separates Einzelteil ausgebildet ist, das den Flüssigkeitseinlass (206k) umfasst.

7. Fahrzeugwindschutzscheibenwischeranordnung (200) nach einem der vorhergehenden Ansprüche, wobei der Schlauchanschluss (206d) ein vorzugsweise kegelstumpfförmiges Befestigungselement (206q) aufweist, durch das der Schlauchanschluss am Wischerarm (210) befestigt ist, wobei vorzugsweise das Befestigungselement (206q) als separates Einzelteil ausgebildet ist.

8. Fahrzeugwindschutzscheibenwischeranordnung (200) nach Anspruch 7, wobei das Befestigungselement (206q) am Wischerarm (210) einrastet.

9. Fahrzeugwindschutzscheibenwischeranordnung (200) nach Anspruch 7 oder 8, wobei das Befestigungselement (206q) einen Stützring (206x) und mindestens eine Befestigungszunge (206y) umfasst, die vom Stützring gestützt wird.

10. Fahrzeugwindschutzscheibenwischeranordnung (200) nach Anspruch 9, wobei das Befestigungselement (206q) mehrere Befestigungszungen (206y) aufweist, die entlang des Umfangs des Stützrings (206x) verteilt sind.

11. Kraftfahrzeug, das die Fahrzeugwindschutzscheibenwischeranordnung (200) nach einem der vorhergehenden Ansprüche umfasst.

## Revendications

1. Ensemble à essuie-glace de pare-brise de véhicule (200), comprenant :
a. un essuie-glace de pare-brise (202) ayant un bras d'essuie-glace (110) et une lame d'essuie-glace (112) attachée à une extrémité extérieure (114) du bras d'essuie-glace ;
b. un arbre pivotant (204) pour faire pivoter l'essuie-glace de pare-brise (202), qui est attaché à une extrémité de base (116) du bras d'essuie-glace ; et
c. un dispositif de pulvérisation de liquide lave-glace (106) incluant :
i. un dispositif à buse de pulvérisation (106a) pour la pulvérisation de liquide lave-glace, qui est situé dans l'essuie-glace de pare-brise (102) ;
ii. un tuyau flexible de buse (106b), qui est raccordé fluidiquement au dispositif à buse de pulvérisation (106a) et est configuré pour la distribution de liquide lave-glace au dispositif à buse de pulvérisation (106a) ;
iii. un tuyau flexible d'alimentation en liquide (106c), qui est raccordé fluidiquement au tuyau flexible de buse (106b) et est configuré pour l'alimentation en liquide lave-glace au tuyau flexible de buse (106b) ; et
iv. un raccord de tuyau flexible (206d), qui raccorde fluidiquement l'un à l'autre le tuyau flexible d'alimentation en liquide (106c) et le tuyau flexible de buse (106b), et qui est ajusté sur l'arbre pivotant (104), le raccord de tuyau flexible (206d) ayant :
- un collier d'assemblage central (206i) par l'intermédiaire duquel le raccord de tuyau flexible est assemblé à l'arbre pivotant (104),
- une partie d'entrée de liquide (206f) avec une entrée de liquide (206k) raccordée au tuyau flexible d'alimentation en liquide (106c) ; et
- une partie de sortie de liquide (206g) avec une sortie de liquide (2061) raccordée au tuyau flexible de buse (106b),
dans lequel au moins la partie de sortie de liquide (206g) du raccord de tuyau flexible est fixée à l'arbre pivotant (204) pour la rotation avec celui-ci, **caractérisé en ce que** le collier d'assemblage (206i) est ajusté par encliquetage sur l'arbre pivotant, l'ajustement par encliquetage permettant de préférence un réglage de la position du raccord de tuyau flexible le long de l'arbre pivotant.

2. Ensemble à essuie-glace de pare-brise de véhicule (200) de la revendication 1, dans lequel le raccord de tuyau flexible (206d) présente la forme de bague circulaire.

3. Ensemble à essuie-glace de pare-brise de véhicule (200) de la revendication 1 ou 2, dans lequel le raccord de tuyau flexible (206d) a un trou traversant central (206h), et l'arbre pivotant (204) pénètre dans le trou traversant central.

4. Ensemble à essuie-glace de pare-brise de véhicule (200) de l'une quelconque des revendications précédentes, dans lequel le raccord de tuyau flexible entier (206d) est fixé à l'arbre pivotant (204) pour la rotation avec celui-ci.

5. Ensemble à essuie-glace de pare-brise de véhicule (200) de l'une quelconque des revendications précédentes, dans lequel le raccord de tuyau flexible a une jupe annulaire (206n), qui entoure l'arbre pivotant (204), et dans lequel l'extrémité libre (206p) de la jupe annulaire fait face à l'opposé de l'essuie-glace de pare-brise (202).

6. Ensemble à essuie-glace de pare-brise de véhicule (200) de l'une quelconque des revendications précédentes, dans lequel le collier d'assemblage (206i) présente la forme de partie individuelle distincte, qui inclut l'entrée de liquide (206k).

7. Ensemble à essuie-glace de pare-brise de véhicule (200) de l'une quelconque des revendications précédentes, dans lequel le raccord de tuyau flexible (206d) a un élément d'assemblage (206q) de préférence de forme tronconique, par l'intermédiaire duquel le raccord de tuyau flexible est assemblé au bras d'essuie-glace (210), dans lequel, de préférence, l'élément d'assemblage (206q) présente la forme de partie individuelle distincte.

8. Ensemble à essuie-glace de pare-brise de véhicule (200) de la revendication 7, dans lequel l'élément d'assemblage (206q) est ajusté par encliquetage sur le bras d'essuie-glace (210).

9. Ensemble à essuie-glace de pare-brise de véhicule (200) de la revendication 7 ou 8, dans lequel l'élément d'assemblage (206q) inclut une bague de support (206x) et au moins une languette d'assemblage (206y) supportée par la bague de support.

10. Ensemble à essuie-glace de pare-brise de véhicule (200) de la revendication 9, dans lequel l'élément d'assemblage (206q) a une pluralité de languettes d'assemblage (206y), qui sont distribuées le long de la circonférence de la bague de support (206x).

11. Véhicule à moteur, comprenant l'ensemble à essuie-glace de pare-brise de véhicule (200) de l'une quelconque des revendications précédentes.
